# NEUE EUROPÄISCHE PATENTSCHRIFT

(11) **EP 2 121 395 B2**
(45) Veröffentlichungstag und Bekanntmachung des Hinweises auf die Entscheidung über den Einspruch: **13.03.2019**
(45) Hinweis auf die Patenterteilung: 28.04.2010
(21) Anmeldenummer: 07847041.6
(22) Anmeldetag: 08.12.2007
(51) Int. Cl.: B60T 7/20

(54) **ANHÄNGEFAHRZEUGBREMS- UND LUFTFEDERUNGSANLAGE**
BRAKING AND AIR SUSPENSION SYSTEM FOR A TRAILER
SYSTÈME DE FREINAGE ET DE SUSPENSION PNEUMATIQUE DE REMORQUE

(30) Priorität: 13.01.2007 DE 102007002020
(43) Veröffentlichungstag der Anmeldung: 25.11.2009
(73) Patentinhaber: WABCO GmbH, 30453 Hannover (DE)
(72) Erfinder: FRANK, Dieter, 30171 Hannover (DE); RISSE, Rainer, 30982 Pattensen-Reden (DE); SIEKER, Armin, 33611 Bielefeld (DE); STENDER, Axel, 31787 Hameln (DE); WITTE, Norbert, 31867 Lauenau (DE)
(86) Internationale Anmeldenummer: PCT/EP2007/010698
(87) Internationale Veröffentlichungsnummer: WO 2008/083801

(56) Entgegenhaltungen:
- DE-A1- 10 139 748
- DE-A1- 10 139 757
- DE-A1- 10 236 921
- DE-U1- 20 122 549

## Beschreibung

Die Erfindung betrifft eine Anhängefahrzeugbrems- und Luftfederungsanlage mit einem mit Vorratsdruck aus einem Vorratsdruckbehälter der Luftfederungsanlage versorgten Hebe-/Senkenventil zum Ändem des Niveaus des Anhängefahrzeugs durch Ändem der Luftmenge in Tragbälgen des Anhängefahrzeugs, mit einem Anhängerbremsventil zur automatischen Einbremsung des Anhängefahrzeugs bei Abriss einer Vorratsleitung, mit einem Löseventil zur Aufhebung der automatischen Bremsung bei abgekoppelten Anhängefahrzeug, mit einem Betätigungsventil für eine Parkbremse, mit einem Überströmventil, über das ein Vorratsdruckbehälter für die Luftfederungsanlage befüllt wird, mit einem mit Vorratsdruck versorgten Luftfederventil zur Regelung des Fahrniveaus des Arthängefahrzeugs und mit einem Überlastschutzventil, das bei betätigter Parkbremse und zusätzlich betätigter Betriebsbremse die Parkbremse proportional zur Belüftung der Betriebsbremse entlüftet.

Derartige Anhängefahrzeugbrems- und Luftfederungsanlagen sind aus der DE 697 060 17 T2 und DE 693 07 057 T2 sowie aus DE 102 36 921 A1 und DE 101 39 757 A1 bekannt.

Die Komponenten der bekannten Anhängefahrzeugbrems- und Luftfederungsanlagen, wie automatische Bremse, Parkventil, Löseventil, Überlastschutz, Überströmventil, Betätigung für Luftfederung heben und senken werden aufwendig einzeln im Fahrzeug verbaut und verrohrt.

Die Aufgabe der vorliegenden Erfindung besteht darin, wenigstens einige der oben genannten Komponenten in ein Gerät zu integrieren, um den Installationsaufwand zu reduzieren.

Diese Aufgabe wird durch die Erfindung gemäß Anspruch 1 gelöst.

Die erfindungsgemäße Aufgabenlösung sieht vor, wenigstens einige der Funktionen der Komponenten in einem Gerät zusammenzufassen. Das Gerät kann als komplette Einheit direkt am Fahrzeugrahmen angebracht werden, so dass ein separater Halter für die Einzelkomponenten entfällt. Durch die Erfindung ergibt sich eine Reduzierung der Anzahl einzelner Komponenten im Anhängefahrzeug sowie eine Reduzierung der Rohrleitungen, Verschraubungen und des Installationsaufwandes für den Fahrzeughersteller.

Die Erfindung soll nachfolgend anhand der beigefügten Zeichnung näher erläutert werden.

Es zeigt
- Fig. 1: ein Schaltbild einer herkömmlichen Anhängefahrzeugbrems- und Luftfederungsanlage,
- Fig. 2: ein Schaltbild eines herkömmlichen Parklösesicherheitsventils (PREV),
- Fig. 3: eine Integration eines Park-Löse-Sicherheitsventils (PREV) in ein Hebe/Senkenventil,
- Fig. 4: die zusätzliche Realisierung eines Überlastschutzes bei der Anordnung nach Fig. 3,
- Fig. 5: die Realisierung eines Überlastschutzes durch Integration eines üblichen 3/2-Wegeventils in das Parklösesicherheitsventil (PREV),
- Fig. 6: die zusätzliche Integration eines Überströmventils zur Sicherung des Luftfederkreises in die Anordnung nach Fig. 4,
- Fig. 7: die zusätzliche Integration eines Übertrömventils zur Sicherung des Luftfederkreises in die Anordnung nach Fig. 5,
- Fig. 8: eine Anordnung ähnlich Fig. 6 mit modifiziertem Anhängerbremsventil zur Realisierung einer automatischen Einbremsung bei Abriss der Vorratsleitung und
- Fig. 9: eine Anordnung ähnlich Fig. 4 mit modifiziertem Anhängerbremsventil zur Realisierung einer automatischen Einbremsung bei Abriss der Vorratsleitung.

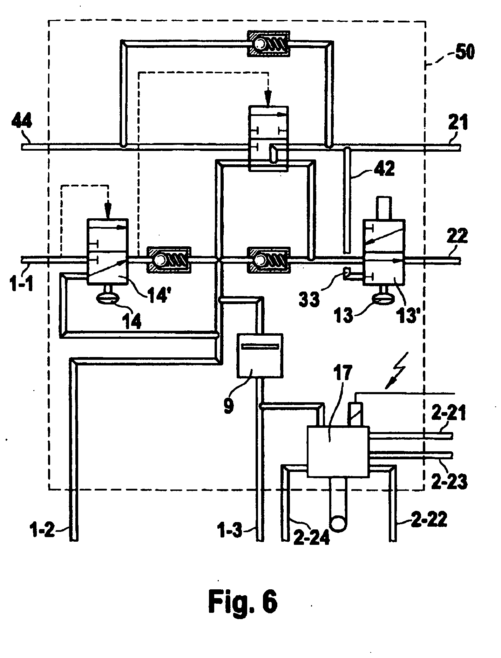

Hierbei zeigen nur die Figuren 6 bis 8 erfindungsgemäße Ausführungsformen.

Gleiche und einander entsprechende Bautelle in den Figuren der Zeichnung sind mit den gleichen Bezugszeichen versehen.

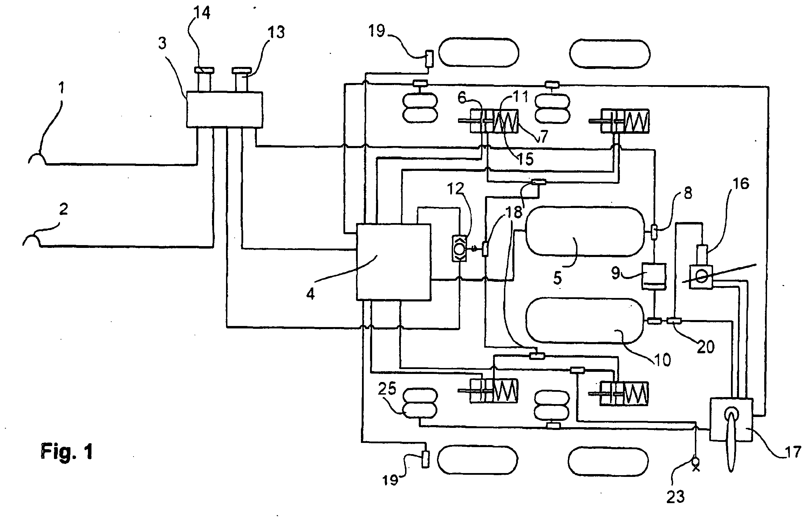

Die Fig. 1 der Zeichnung zeigt eine herkömmliche Anhängefahrzeugbrems- und Luftfederungsanlage für ein Anhängefahrzeug (nicht dargestellt), das über einen ersten Kupplungskopf 1 für Vorratsdruck und einen zweiten Kupplungskopf 2 für Steuerdruck mit einem Zugfahrzeug (nicht dargestellt) verbunden ist. Über ein Anhängerbremsventil 3 wird der Steuerdruck einem Anhänger-EBS-Modulator 4 bzw. Anhänger-ABS-Modulator zugeführt.,Das Anhängerbremsventil 3 hat einen Betätigungsknopf 13 zur Betätigung einer Parkbremseinrichtung sowie einen weiteren Betätigungsknopf 14 zum Lösen einer automatischen Bremse bei abgekoppeltem Anhängefahrzeug integriert. Der Vorratsdruck fließt über ein im Anhängerbremsventil 3 integriertes Rückschlagventil zu einem Vorratsdruckbehälter 5 für die Bremsanlage. Vom EBS-Modulator 4 werden Betriebsbremsteile 6 von Kombibremszylindem 7 (Federspelcherbremszylinder) angesteuert. Außerdem sind mindestens zwei ABS-Sensoren 19 zur Sensierung der Raddrehzahlen angeschlossen. Am Betriebsbremsteil 6 ist des Weiteren ein Prüfanschluss 23 zum Messen des aktuellen Bremsdruckes vorgesehen. Die Kombibremszylinder 7 bestehen jeweils aus dem Betriebsbremsteil 6 und einem Parkbremsteil 11 mit integrierter Feder 15. Vom Vorratsdruckbehälter 5 wird der EBS-Modulator 4 mit Vorratsdruck versorgt. Über ein T-Stück 8 Ist ein Überströmventil 9 angeschlossen, über das ein Vorratsbehälter 10 für eine Luftfederung 25 befüllt wird. Das Überströmventil 9 hat die Aufgabe, bei Druckverlust in der Druckfederung 25 den Druck in der Betriebsbremsanlage zu sichem, um so die Bremsfähigkeit des Anhängefahrzeugs sicher zu stellen.

Um die Radbremsen vor einer Zerstörung durch eine Überbeanspruchung durch eine Kraftaddition der Kombibremszylinder 7 zu schützen, ist in der Bremsanlage ein Überlastschutzventil 12 vorhanden, das in diesem Beispiel aus einem 3/2-Wegeventil besteht. Von diesem Überlastschutzventil 12 wird der Druck über T-Stücke 18 zu den Kombibremszylindern 7 verteilt. Die Parkbremse wird durch Betätigung des Betätigungsknopfes 13 eingelegt. Dadurch wird der Parkbremsteil 11 der Kombibremszylinder 7 entlüftet, so dass die integrierte Feder 15 die Radbremse betätigen kann.

Wird bei betätigter Parkbremse 11 zusätzlich die Betriebsbremse 6 betätigt, fließt der Bremsdruck über das Überlastschutzventil 12 in den Parkbremsteil 11 der Kombizylinder 7 und baut so proportional zur aufgebauten Bremskraft im Betriebsbremsteil 6 die Kraft im Parkbremsteil 11 ab, so dass keine Kraftaddition stattfindet.

Die Luftfederungsanlage weist ein Luftfederventil 16 und ein Hebe-/Senkenventil 17 auf. Das Luftfederventil 16 wird über ein T-Stück 20 mit Vorratsdruck versorgt und regelt das Fahrniveau des Anhängefahrzeugs aus, indem die Luftmenge in Tragbälgen der Luftfederung 25 verändert wird. Über das Hebe-/Senkenventil 17 kann das Niveau des Anhängefahrzeugs, z.B. zum Be- oder Entladen, von Hand verändert werden. In der Zeichnung ist dargestellt ein Hebe-/Senkenventil 17 in Form eines so genannten Drehschieberventils mit einem Hebel zur Betätigung. Zur Betätigung des Ventils sind auch andere Ausführungsformen einsetzbar, z. B. jeweils ein Betätigungsknopf zum Heben und ein Betätigungsknopf zum Senken.

Die Komponenten der Anhängefahrzeugbrems- und Luftfederungsanlage sind einzeln im Fahrzeug verbaut und verrohrt.

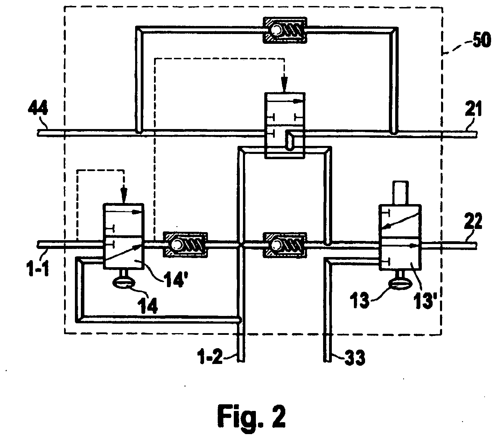

Die Fig. 2 zeigt das Schaltbild eines an sich bekannten Parklösesicherheitsventils 50 herkömmlicher Bauart.

Das Parklösesicherheitsventil 50 ersetzt in Anhängefahrzeugbremsanlagen das bisher verbaute Anhängerbremsventil und das Doppellöseventil. Die über den Kupplungskopf 1 vom Motorwagen kommende Druckluft gelangt über den Anschluss 1-1 zum Anschluss 1-2 und weiter zum Vorratsbehälter 5 (vgl. Fig. 1) des Anhängers. Über den Anschluss 22 strömt die Druckluft zum nachgeschalteten 2-Wege-Schnelllöseventil und belüftet die Federspeicherkammern der Kombibremszylinder 7.

Beim Betätigen der Bremsanlage des Motorwagens gelangt Druckluft über den Kupplungskopf 2 und Anschluss 44 durch das Parklösesicherheitsventil 50 zum EBS-Anhängemodulator 4. Mit dem Betätigungsknopf 14 für das Löseventil 14' kann die Bremsanlage nach einer automatischen Bremsung bei abgestelltem Fahrzeug ohne Druckluftversorgung von Hand gelöst werden, wenn ausreichend Vorratsdruck im Behälter 5 vorhanden ist. Mit dem anderen Betätigungsknopf 13 kann das Parkbremsventil 14' betätigt und die Parkbremse, durch ein Lüften der Federspeicher 15, eingelegt bzw. wieder gelöst werden.

Bei abgekuppeltem Fahrzeug (Vorratsleitung 1-1 entlüftet) erfolgt eine automatische Bremsung über die Betriebsbremse 6 und gleichzeitig eine Überbrückung des im Parklösesicherheitsventil 50 integrierten Rückschlagventils im Federspeicherkreis. Bei Abfall des Vorratsdrucks im Behälter 5 des abgestellten Anhängefahrzeugs übernehmen die Federspeicher 15 automatisch die Bremsung und sichern das Fahrzeug gegen Wegrollen.

Alle Regelfunktionen sind bei Abriss der Vorratsleitung aktiv.

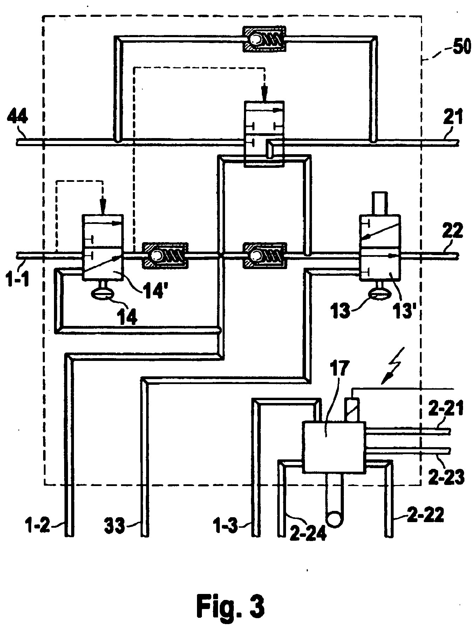

In der Fig. 3 ist die Integration des Parklösesicherheitsventils 50 in das Hebe-/Senkenventil 17 (vgl. Fig. 1) dargestellt.

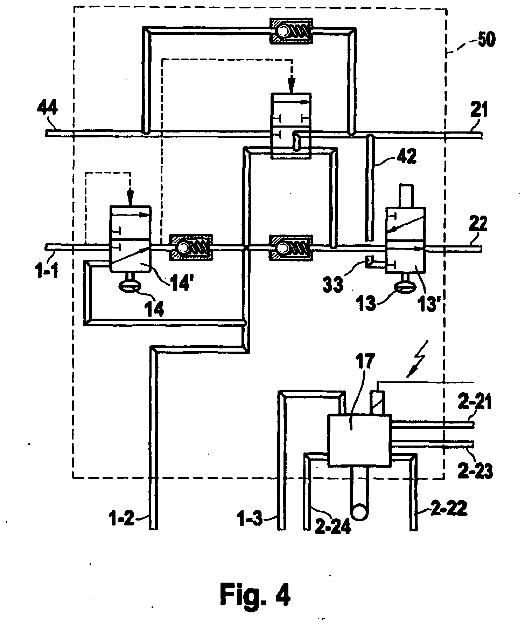

In der Fig. 4 ist die zusätzliche Realisierung einer Überlastschutzfunktion dargestellt, die auf äußerst einfache Weise erfolgt, nämlich durch eine Verbindung 42 zwischen dem Anschluss 21 und dem Parkventil 13', bzw. dessen Entlüftungsanschluss 33, wodurch bei Betätigung des Parkventils 13' der Federspeicherkreis direkt mit dem Anschluss 21 des Parklösesicherheitsventils 50 verbunden wird. Wenn am Kupplungskopf 2 bzw. am Anschluss 44 Steuerdruck anliegt, kann der Federspeicherkreis nur bis zu dem Niveau des anliegenden Druckes entlüftet werden und stellt somit den Überlastschutz sicher. Der Vorteil dieser Schaltung besteht darin, dass keine zusätzlichen Komponenten benötigt werden.

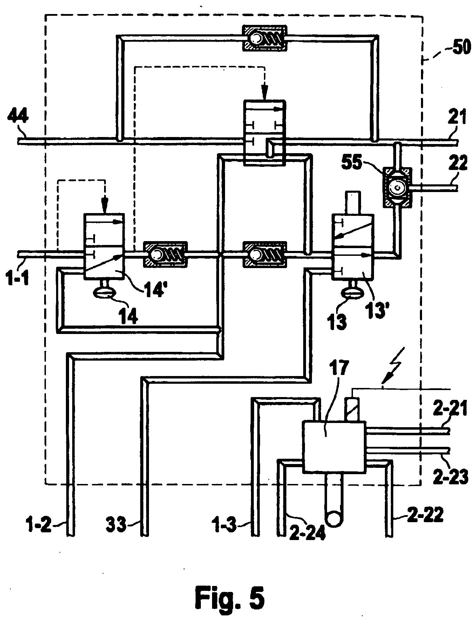

In der Fig. 5 ist eine weitere einfache Realisierung eines Überlastschutzes dargestellt. Hier erfolgt der Überlastschutz durch Einbau eines 3/2-Wegeventils 55 zwischen Anschluss 21 und 22. Wenn Steuerdruck am Anschluss 44 anliegt, kann die Parkbremse 11 nicht betätigt werden.

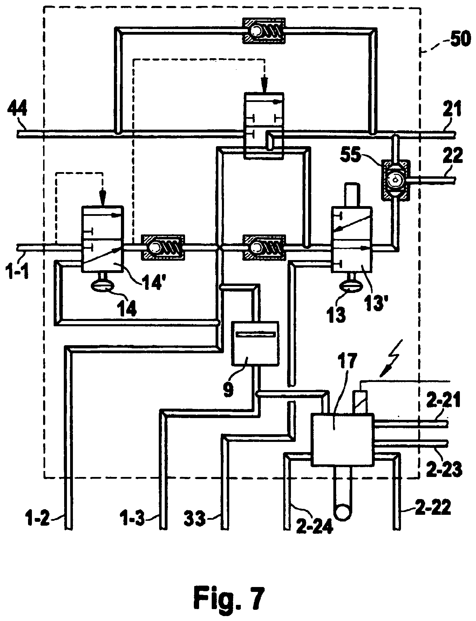

Die Fig. 6 und 7 zeigen bei den Anordnungen nach den Fig. 4 und 5 die zusätzliche Integration eines Überströmventils 9, über das der Vorratsbehälter 10 für die Luftfederung 25 befüllt wird. Diese Ausbildung dient der Sicherung des Luftfederkreises.

In den Fig. 6 und 7 ist damit insgesamt die Integration der Funktionen von Überlastschutzventil 12, eines Überströmventils 9, eines Hebe-/Senkenventils 17 und eines Parklösesicherheitsventils 50 in ein Gerät gezeigt. Bis auf den Anhängemodulator 4 und das Luftfederventil 16 sind alle Komponenten in einem kompakten Gerät zusammengefasst. Hierdurch ergeben sich erhebliche Installationsvereinfachungen und Einsparungen an Leitungen und Verschraubungen.

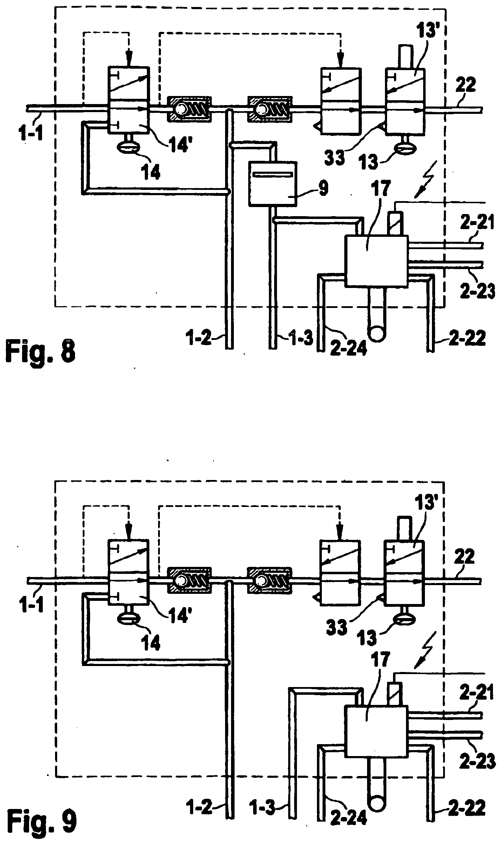

Die Fig. 8 und 9 zeigen Anordnungen ähnlich Fig. 6 und Fig. 4, also Anhängerbremsventile (PREV) - aber ohne den Anschluss 44 für Steuerdruck und ohne zum EBS-Anhänger-Modulator 4 führenden Anschluss 21. Der Steuerdruck vom gelben Kupplungskopf 1 strömt also nicht über das Anhängerbremsventil 3 gemäß den Ausführungsformen nach den Fig. 1 bis 7, sondern direkt zum EBS-Anhänger-Modulator 4.

Die automatische Bremsung des Anhängefahrzeugs bei Abriss der Vorratsleitung 2 erfolgt durch Entlüften der Federspeicherbremszylinder 7, und nicht wie bei den Ausführungsformen nach den Fig. 6 und 4 durch Einbremsen über die Steuerleitung (Anschluss 44). Wenn der Druck bei den Anordnungen nach den Fig. 8 und 9 in der Vorratsleitung (Anschluss 1-1) unter einen vorbestimmten Wert fällt (z.B. 2,5 bar), schaltet das Ventil 13' um und entlüftet die am Anschluss 22 angeschlossenen Federspeicherbremszylinder 7.

Bei mit Luftfederung und Hebe-/Senkventilen ausgerüsteten Anhängefahrzeugen kann die Höhe des Fahrzeugrahmens manuell angepasst werden. Erfahrungsgemäß werden die Hebe/Senkventile vor Fahrbeginn des Öfteren nicht in die Fahrstellung zurückgestellt. Dies kann zu Schäden im Luftfederungssystem oder zu Über-/Unterbremsen führen. Die Ventile sind deshalb mit einer RTR-Funktion (Reset To Right) ausgestattet, d.h., wenn das manuelle Zurückstellen vergessen wird, bringen diese Ventile die Fahrzeugsrahmenhöhe automatisch zurück in die normale Fahrposition, wenn eine vorprogrammierte Geschwindigkeit erreicht wird.

Die Bezugszeichen 1-2, 1-3, 2-21, 2-22, 2-23 und 2-24 bezeichnen Anschlüsse für den Vorratsbehälter (1-2), den Luftfederbehälter (1-3), für Luftfederventile (2-21 und 2-23) sowie für Luftfederbälge (2-22 und 2-24).

## Patentansprüche

1. Anhängefahrzeugbrems- und Luftfederungsanlage
mit einem mit über eine Vorratsleitung zugeführtem Vorratsdruck aus einem Vorratsdruckbehälter der Luftfederungsanlage versorgten Hebe-/Senkenventil zum Ändern des Niveaus des Anhängefahrzeugs durch Ändern der Luftmenge in Tragbälgen des Anhängefahrzeugs,
mit einem Anhängerbremsventil bzw. Parklösesicherheitsventil zur automatischen Einbremsung des Anhängefahrzeugs bei Abriss der Vorratsleitung,
mit einem Löseventil zur Aufhebung der automatischen Bremsung bei abgekoppeltem Anhängefahrzeug,
mit einem Betätigungsventil für eine Parkbremse mit Federspeicherbremsventil,
mit einem Überströmventil, über das ein Vorratsdruckbehälter für die Luftfederungsanlage befüllt wird,
mit einem mit Vorratsdruck versorgten Luftfederventil zur Regelung des Fahrniveaus des Anhängefahrzeugs, und
mit einem Überlastschutzventil, das bei betätigter Parkbremse und zusätzlich betätigter Betriebsbremse die Parkbremse proportional zur Belüftung der Betriebsbremse entlüftet,
**dadurch gekennzeichnet, dass** die Funktion des Löseventils (14') und des Parkventils bzw. Betätigungsventils (13') der Parkbremse (11) und des Überströmventils (9) in das Hebe-/Senkenventil (17) integriert sind.

2. Anhängefahrzeugbrems- und Luftfederungsanlage nach Anspruch 1, **dadurch gekennzeichnet, dass** zur Realisierung der Überlastschutzfunktion der Entlüftungsanschluss (33) des Parkventils (13') bzw. der Entlüftungsanschluss (33) des Federspeicherbremszylinders (7) mit einem Steuerleitungsanschluss (21) eines Anhänger-EBS- oder -ABS-Modulators (4) verbunden ist.

3. Anhängefahrzeugbrems- und Luftfederungsanlage nach Anspruch 1, **dadurch gekennzeichnet, dass** zur Realisierung der Überlastschutzfunktion ein 3/2-Wegeventil (55) zwischen einem Steuerleitungsanschluss (21) eines Anhänger-EBS- oder -ABS-Modulators (4) und einem Anschluss (22) zum Federspeicherbremszylinder (7) angeordnet ist.

4. Anhängefahrzeugbrems- und Luftfederungsanlage nach Anspruch 1, **dadurch gekennzeichnet, dass** zur Realisierung der Überströmfunktion das Überströmventil (9) mit einem Anschluss (1-2) des Vorratsdruckbehälters (10) verbunden ist.

5. Anhängefahrzeugbrems- und Luftfederungsanlage nach einem der vorhergehenden Ansprüche, **dadurch gekennzeichnet, dass** der Steuerdruck dem EBS- oder ABS-Anhänger-Modulator (4) nicht über das Anhängerbremsventil (3), sondern direkt zugeführt ist, derart, dass bei Abriss der Vorratsleitung die automatische Bremsung des Anhängerfahrzeugs durch Entlüftung des Federspeicherbremszylinders (7) über das Betätigungsventil (13') der Parkbremse (11) erfolgt.

## Claims

1. Trailer vehicle brake and air suspension system having a raising/lowering valve, which is supplied with supply pressure via a supply line from a supply pressure vessel of the air suspension system, for changing the level of the trailer vehicle by changing the air quantity in support bellows of the trailer vehicle,
having a trailer brake valve or parking release safety valve for automatically braking the trailer vehicle in the event of a breakaway of the supply line,
having a release valve for preventing the automatic braking when the trailer vehicle is decoupled,
having an actuating valve for a parking brake with a spring brake valve,
having an overflow valve via which a supply pressure vessel for the air suspension system is filled,
having an air spring valve, which is supplied with supply pressure, for regulating the driving level of the trailer vehicle, and
having an overload protection valve which, when the parking brake is actuated and the service brake is additionally actuated, deaerates the parking brake proportionally to the aeration of the service brake, **characterized in that** the function of the release valve (14') and of the parking valve or actuating valve (13') of the parking brake (11) and of the overflow valve (9) are integrated into the raising/lowering valve (17).

2. Trailer vehicle brake and air suspension system according to Claim 1, **characterized in that** to realize the overload protection function, the deaeration port (33) of the parking valve (13') or the deaeration port (33) of the spring brake cylinder (7) is connected to a control line port (21) of a trailer EBS or ABS modulator (4).

3. Trailer vehicle brake and air suspension system according to Claim 1, **characterized in that** to realize the overload protection function, a 3/2 directional control valve (55) is arranged between a control line port (21) of a trailer EBS or ABS modulator (4) and a port (22) to the spring brake cylinder (7).

4. Trailer vehicle brake and air suspension system according to Claim 1, **characterized in that** to realize the overflow function, the overflow valve (9) is connected to a port (1-2) of the supply pressure vessel (10) .

5. Trailer vehicle brake and air suspension system according to one of the preceding claims, **characterized in that** the control pressure is supplied to the EBS or ABS trailer modulator (4) not via the trailer brake valve (3) but rather directly, in such a way that, in the event of a breakaway of the supply line, the automatic braking of the trailer vehicle takes place by means of a deaeration of the spring brake cylinder (7) via the actuating valve (13') of the parking brake (11).

## Revendications

1. Système de freinage et de suspension pneumatique de remorque comprenant :
une soupape de levage/abaissement alimentée en pression de réserve acheminée par une conduite de réserve depuis un récipient de pression de réserve du système de suspension pneumatique, pour faire varier le niveau de la remorque en modifiant la quantité d'air dans les soufflets porteurs de la remorque,
une soupape de freinage de remorque ou une soupape de sécurité de desserrage au stationnement pour freiner automatiquement la remorque en cas de décrochage de la conduite de réserve,
une soupape de desserrage pour supprimer le freinage automatique lorsque la remorque est désaccouplée,
une soupape d'actionnement pour un frein de stationnement avec une soupape de frein à ressort accumulateur,
une soupape de décharge, par le biais de laquelle un récipient de pression de réserve pour le système de suspension pneumatique est rempli,
une soupape de régulation du niveau alimentée en pression de réserve pour réguler le niveau de conduite de la remorque, et
une soupape de protection contre les surcharges, qui, lorsque le frein de stationnement est activé et que le frein de service est également activé, évacue le frein de stationnement de manière proportionnelle à la ventilation du frein de service,
**caractérisé en ce que** le fonctionnement de la soupape de desserrage (14') et de la soupape de stationnement ou soupape d'actionnement (13') du frein de stationnement (11) et de la soupape de décharge (9) sont intégrés dans la soupape de levage/abaissement (17) .

2. Système de freinage et de suspension pneumatique de remorque selon la revendication 1, **caractérisé en ce que** pour mettre en oeuvre la fonction de protection contre les surcharges, le raccord d'évacuation (33) de la soupape de stationnement (13') ou le raccord d'évacuation (33) du cylindre de frein à ressort accumulateur (7) est connecté à un raccord de conduite de commande (21) d'un modulateur EBS ou ABS de remorque (4) .

3. Système de freinage et de suspension pneumatique de remorque selon la revendication 1, **caractérisé en ce que** pour mettre en oeuvre la fonction de protection contre les surcharges, on dispose une soupape à 3/2 voies (55) entre un raccord de conduite de commande (21) d'un modulateur EBS ou ABS de remorque (4) et un raccord (22) au cylindre de frein à ressort accumulateur (7).

4. Système de freinage et de suspension pneumatique de remorque selon la revendication 1, **caractérisé en ce que** pour mettre en oeuvre la fonction de protection contre les surcharges, la soupape de décharge (9) est connectée à un raccord (1-2) du récipient de pression de réserve (10).

5. Système de freinage et de suspension pneumatique de remorque selon l'une quelconque des revendications précédentes, **caractérisé en ce que** la pression de commande est acheminée au modulateur EBS ou ABS de remorque (4) non pas par le biais de la soupape de frein de la remorque (3), mais directement, de telle sorte qu'en cas de décrochage de la conduite de réserve, le freinage automatique de la remorque ait lieu par évacuation du cylindre de frein à ressort accumulateur (7) par le biais de la soupape d'actionnement (13') du frein de stationnement (11).
